## Europäisches Patentamt
## European Patent Office
## Office européen des brevets

(11) Veröffentlichungsnummer: **0 046 177**
**A1**

(12) **EUROPÄISCHE PATENTANMELDUNG**

(21) Anmeldenummer: 81105080.6

(22) Anmeldetag: 01.07.81

(51) Int. Cl.³: **G 05 B 19/12**

(30) Priorität: 16.08.80 DE 3030922

(43) Veröffentlichungstag der Anmeldung: 24.02.82
Patentblatt 82/8

(84) Benannte Vertragsstaaten: **FR GB IT**

(71) Anmelder: **MESSER GRIESHEIM GMBH,
Patentabteilung Hanauer Landstrasse 330,
D-6000 Frankfurt/Main (DE)**

(72) Erfinder: **Halbauer, Klaus, Dr., Eisenbahnstrasse 147,
D-6072 Dreieich (DE)**

(54) **Einrichtung zur Erstellung eines Steuerlochstreifens für Werkzeugmaschinen, insbesondere Brennschneidmaschinen.**

(57) Eine derartige Einrichtung weist einen Rechner (10) auf, dem zur Lochstreifenerstellung geometrische Kennwerte des herzustellenden Bauteiles (14) eingegeben werden.

Um eine einfache Bauteilbeschreibung/Codierung zu erreichen, wird vorgeschlagen, daß zur Bauteileingabe an den Rechner (10) eine Video-Kamera (11) angeschlossen ist, mit der die geometrische Form sowie die Abmessungen einer Bauteilzeichnung (13, 14) erfaßbar und damit direkt dem Rechner zuführbar sind.

EP 0 046 177 A1

- 1 -

MESSER GRIESHEIM GMBH                          MG 1236

Kennwort: Eingabe-Video-Kamera                 EM 965

Erfinder:       Halbauer                       Ordner: II


Einrichtung zur Erstellung eines Steuerlochstreifens für
Werkzeugmaschinen, insbesondere Brennschneidmaschinen

Die vorliegende Erfindung betrifft eine Einrichtung zur
Erstellung eines Steuerlochstreifens für Werkzeugmaschinen, insbesondere Brennschneidmaschinen, mit einem
Rechner, dem die zur Lochstreifenerstellung geometrischen
Kennwerte des herzustellenden Bauteiles eingegeben werden.

Bei den bisher bekannt gewordenen Einrichtungen dieser
Art erfolgt die Eingabe der geometrischen Kennwerte (das
Codieren) der Bauteile mit Hilfe von speziellen Programmiersprachen wie z.B. der Programmsprache BASIC-EXAPT.

Einfache Bauteile können mit diesen Programmsprachen relativ einfach und in kurzer Zeit"rechnergerecht beschrieben" werden. Komplizierte Bauteilformen, insbesondere solche mit geschwungenen Außenkonturen sind dagegen nur mit großen Aufwand zu beschreiben.

Aufgabe der vorliegenden Erfindung ist es daher, eine Einrichtung der eingangs genannten Art zu schaffen, die eine einfache Bauteilbeschreibung auch bei komplizierten Bauteilformen ermöglicht.

Zur Lösung dieser Aufgabe wird erfindungsgemäß vorgeschlagen, daß zur Bauteileingabe an den Rechner eine Video-Kamera angeschlossen ist, mit der die geometrische Form sowie die Abmessungen einer Bauteilzeichnung erfaßbar und damit direkt dem Rechner zuführbar sind.

Durch die Erfindung wird es vorteilhaft möglich, eine Konstruktionszeichnung, die auch verkleinert sein kann, oder eine beliebige mit Maßen versehene Bauteil-Handskizze oder eine Designerzeichnung direkt zur Lochstreifenerstellung zu verwenden, wodurch eine besonders einfache und zeitsparende Bauteilcodierung/Lochstreifenerstellung erreichbar ist.

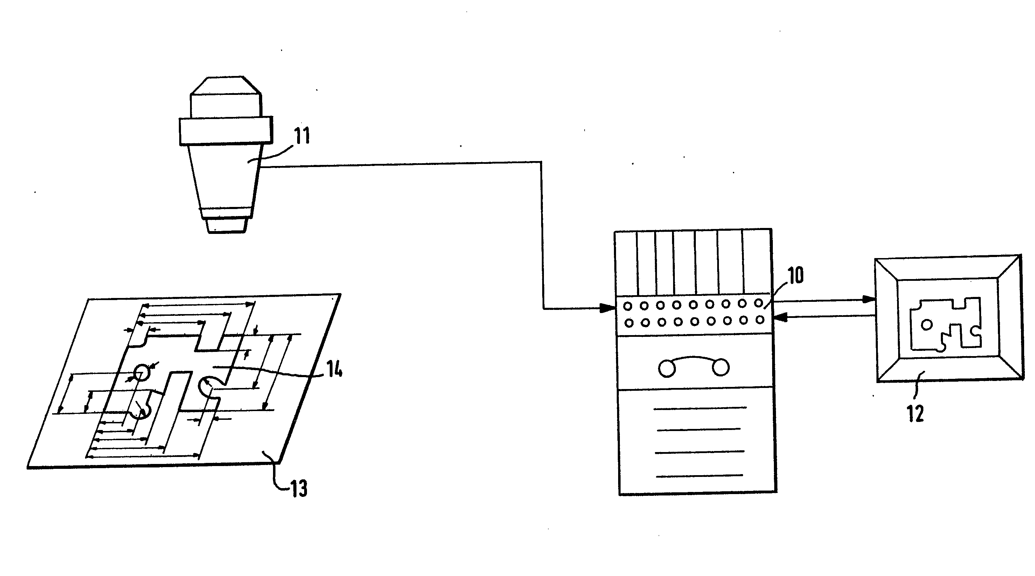

In der Zeichnung ist eine schematische Darstellung, die die erfindungsgemäße Einrichtung, veranschaulicht.

Dabei ist der Rechner (beispielsweise ein von der Anmelderin unter der Bezeichnung SPC 16/65 vertriebener Rechner) mit 10 bezeichnet. Dem Rechner 10 ist eingangsseitig eine Video-Kamera 11 und ausgangsseitig ein graphisches Ausgabegerät 12 zugeordnet. Die Video-Kamera 11 ist bevorzugt entsprechend einer von der Fa. ERA-General-Automation, Aachen unter der Bezeichnung ERASCOPE 600 vertriebenen Kamera ausgebildet. Das graphische Ausgabegerät 12 ist als Plotter, graphischer Bildschirm oder dergl. ausgebildet. Die Zeichnung ist mit 13 bezeichnet. Diese Ausgangszeichnung 13 besteht im einfachsten Fall aus einer Handskizze, die die Formen (Außenkontur, Aussparungen) des Bauteiles 14 darstellt für das ein Steuerlochstreifen hergestellt werden soll. Zusätzlich sind die Abmessungen des Bauteiles in Form von Maßzahlen und Maßpfeilen in der Zeichnung bereits enthalten. Diese Zeichnung wird von der VIDEO-KAMERA 11 erfaßt, und bevorzugt die charakteristischen Punkte (zum Beispiel Schnittpunkte von Konturelementen, Endpunkte von Maßpfeilen) als digitalisierte, geometrische Daten dem Rechner 10 zur Verfügung gestellt. Dieser ermittelt mittels einem installierten Programm aus den übrigen Daten die Form des Bauteiles und prüft dabei, in-wieweit alle benötigten Abmessungen bereits eingegeben wurden. Fehlende Abmessungen werden ebenfalls festgestellt.

Gleichzeitig oder je nach Arbeitsweise werden anschliessend die vom Rechner 10 festgestelle Bauteilform und die ermittelten geometrischen Daten sowie die als fehlend erkannten Daten auf einem graphischen Ausgabegerät, (graphischer Bildschirm, Plotter, elektrostatischer Plotter) dargestellt. In bekannter interaktiver Arbeitsweise können nun an dem so erfaßten Bauteil Korrekturen, Ergänzungen, Änderungen sowohl in der Form als auch in den Maßen vorgenommen werden. Hier kommt vorzugsweise eine Menütechnik in Frage, deren Befehlselemente sich auf die Konturelemente der Bauteilform beziehen, d.h. der Rechner bietet die einzelnen Bahnelemente, zum Beispiel solche, deren Vermaßung noch fehlt, dem Benutzer zur weiteren Bearbeitung an. Weitere Menüelemente sind zum Beispiel Einfügungen von Radien, Definieren von tangentialen Übergängen, Löschen von Konturelementen und dgl.

Nach Beendigung dieser Arbeiten können vom Rechner 10 die so codierten/beschriebenen Bauteile in an sich bekannter Weise weiterverarbeitet, beispielsweise geschachtelt, das Ausdrucken des Steuerlochstreifens durch einen Lochstreifendrucker veranlaßt werden.

Durch die Erfindung wird dem Benutzer die bisher notwendige aufwendige Arbeit abgenommen, die Form der Bauteile mit expliziten programmsprachenabhängigen Konturangaben zu beschreiben. Vielmehr ist vorteilhaft eine einfache Skizze mit den notwendigen Hauptabmessungen ausreichend.

Be/Hi
EM 965
Ffm., 31.07.1980

Patentansprüche

1. Einrichtung zur Erstellung eines Steuerlochstreifens für Werkzeugmaschinen, insbesondere Brennschneidmaschinen mit einem Rechner, dem die zur Lochstreifenerstellung geometrischen Kennwerte des herzustellenden Bauteiles eingegeben werden,
dadurch gekennzeichnet,
daß zur Bauteileingabe an den Rechner (10) eine Video-Kamera (11) angeschlossen ist, mit der die geometrische Form sowie die Abmessungen einer Bauteilzeichnung (13,14) erfaßbar und damit direkt dem Rechner zuführbar sind.

2. Einrichtung nach Anspruch 1,
dadurch gekennzeichnet,
daß an den Rechner (10) eine graphisches Ausgabegerät (12) zur Kontrolle/Korrektur der Bauteileingabe angeschlossen ist.

Be/Hi
EM 965
Ffm., 31.07.1980
MG 1236

0046177

Europäisches
Patentamt

**EUROPÄISCHER RECHERCHENBERICHT**

0046177

Nummer der Anmeldung

EP 81 10 5080

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| EX | GB - A - 1 594 332 (E.J. WIGHTMAN)<br>* Insgesamt * | 1,2 |
| | -- | |
| | DE - A - 1 904 664 (FORD-WERKE AG)<br>* Seite 3, Zeile 18 - Seite 4, Zeile 16 * | 1 |
| | -- | |
| | PROCEEDINGS OF THE ANNUAL MEETING AND TECHNICAL CONFERENCE, New horizons for manufacturing", Los Angeles, 25.-28. März 1979, N.C.S. Spring Lake, U.S.A.<br>D.C. BERAN: "Numerical control programming via computer graphics"<br>* Insgesamt * | 2 |
| | -- | |
| | US - A - 3 757 095 (N.B. KIWIET, TEKTRONIX, INC.)<br>* Zusammenfassung * | 2 |
| | -- | |
| | DE - A - 1 936 442 (SIEMENS A.G.)<br>* Anspruch 1; Bild 1 * | 1 |
| | ----- | |

**KLASSIFIKATION DER ANMELDUNG (Int. Cl.³)**

G 05 B 19/12

**RECHERCHIERTE SACHGEBIETE (Int. Cl.³)**

G 05 B 19/42
19/405

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 18-11-1981 | CORNILLIE |

EPA form 1503.1 06.78